# EUROPÄISCHE PATENTSCHRIFT

(11) **EP 3 386 787 B1**
(45) Veröffentlichungstag und Bekanntmachung des Hinweises auf die Patenterteilung: **23.06.2021**
(21) Anmeldenummer: 16794544.3
(22) Anmeldetag: 26.10.2016
(51) Int. Cl.: B60J 7/02, B60J 7/043, B60J 7/19

(54) **ÖFFNUNGSFÄHIGES FAHRZEUGDACH, UMFASSEND VERSTELLKINEMATIK MIT KOPPELSTANGE**
OPENABLE VEHICLE ROOF, COMPRISING ADJUSTMENT KINEMATICS WITH A COUPLING ROD
TOIT OUVRANT DE VÉHICULE, COMPRENANT UNE CINÉMATIQUE DE DÉPLACEMENT À BIELLE

(30) Priorität: 10.12.2015 DE 102015121533
(43) Veröffentlichungstag der Anmeldung: 17.10.2018
(73) Patentinhaber: Webasto SE, 82131 Stockdorf (DE)
(72) Erfinder: STENVERS, Jürgen, 82131 Stockdorf (DE); FRANK, Florian, 82131 Stockdorf (DE); ZÖRB, Daniel, 82131 Stockdorf (DE)
(74) Vertreter: advotec.
(86) Internationale Anmeldenummer: PCT/EP2016/075846
(87) Internationale Veröffentlichungsnummer: WO 2017/097492

(56) Entgegenhaltungen:
- EP-A1- 2 607 125
- WO-A2-2015/124685
- US-A1- 2015 048 655

## Beschreibung

Die Erfindung betrifft ein öffnungsfähiges Fahrzeugdach mit den Merkmalen des Oberbegriffs des Patentanspruchs 1.

Ein derartiges Fahrzeugdach ist aus der Praxis bekannt und stellt beispielsweise ein so genanntes Spoilerdach mit einer Schiebedachanordnung dar, bei der ein in Dachlängsrichtung verfahrbares Deckelelement zur Freigabe einer Dachöffnung mit seinem hinteren Rand gegenüber einem Festdachabschnitt nach oben ausstellbar und oberhalb des Festdachabschnitts in Heckrichtung verfahrbar ist. Das Deckelelement ist bezogen auf eine vertikale Dachlängsmittelebene beidseits jeweils mit einer Verstellkinematik gekoppelt, mittels der es zwischen einer die Dachöffnung verschließenden Schließstellung und einer die Dachöffnung zumindest teilweise freigebenden Öffnungsstellung verstellbar ist, in welcher es oberhalb des Festdachabschnitts angeordnet ist. Die Verstellkinematiken umfassen jeweils einen Antriebsschlitten, der in einer Führungsschiene geführt ist, und einen Ausstellhebel, der zum Ausstellep des heckseitigen Randes des Deckelelements bzw. zum Absenken des heckseitigen Randes des Deckelelements mittels einer Koppelstange verschwenkbar ist, die über ein Koppelglied lösbar mit dem jeweiligen Antriebsschlitten koppelbar ist. In einer Koppelstellung ist das Koppelglied und damit die Koppelstange mit dem jeweiligen Antriebsschlitten verbunden, der dadurch ein Verstellmoment in den Ausstellhebel eintragen kann. In einer Entkoppelstellung, in der der Ausstellhebel seine Ausstellposition einnimmt, kann der Antriebsschlitten zum Verschieben des Deckelelements in Fahrzeuglängsrichtung in der betreffenden Führungsschiene verfahren werden, ohne dass der Ausstellhebel über die Koppelstange betätigt werden würde. In der Entkoppelstellung ist das Koppelglied der Koppelstange von einer Aufnahme der Führungsschiene aufgenommen. Hierbei besteht aber das Risiko, dass sich das Koppelglied in nicht gewollter Weise selbsttätig aus der Aufnahme der Führungsschiene löst, was eine unkontrollierte Betätigung des Ausstellhebels auslösen kann.

Aus der Druckschrift US 2015/0048655 A1 ist ein öffnungsfähiges Fahrzeugdach bekannt, das beidseits in einer Führungsschiene geführt ist. In den Führungsschienen sind Verstellkinematiken für das Deckelelement angeordnet, die jeweils einen Führungsschlitten und einen Steuerschlitten umfassen, der mit einem Antriebskabel verbunden ist. Der Steuerschlitten ist über eine Koppelstange mit einem heckseitigen Führungselement verbunden, das in der Führungsschiene geführt ist. Die Koppelstange ist in Dachquerrichtung verschwenkbar. In einem gekoppelten Zustand ist die Koppelstange mit dem Steuerschlitten verbunden. Im entkoppelten Zustand kann die Koppelstange mittels einer Feder, die sich an dem Steuerschlitten abstützt, in Dachquerrichtung verschwenkt werden, so dass ein Riegelstein in eine Riegelausnehmung der Führungsschiene einrückt.

Aus der Druckschrift WO 2015/124685 A2 ist ein öffnungsfähiges Fahrzeugdach bekannt, das ebenfalls ein Deckelelement umfasst, das mittels beidseits angeordneten Verstellkinematiken zwischen einer Öffnungsstellung und einer Schließstellung verstellbar ist. Die Verstellkinematiken haben jeweils einen vorderen Antriebsschlitten, der über eine Koppelstange mit einem hinteren Antriebsschlitten koppelbar ist. Die Koppelstange ist mit einem Riegelhaken versehen, der mittels einer Feder vorgespannt ist und zur Sicherung des hinteren Antriebsschlittens gegen ein Verschieben in Dachlängsrichtung in eine Ausnehmung der Führungsschiene eingreift.

Der Erfindung liegt die Aufgabe zugrunde, ein öffnungsfähiges Fahrzeugdach der einleitend genannten Gattung mit einer Koppelstange zu schaffen, dessen Koppelglied in der Entkoppelstellung der Koppelstange zuverlässig in der Aufnahme der Führungsschiene gehalten ist.

Diese Aufgabe ist erfindungsgemäß durch das öffnungsfähige Fahrzeugdach mit den Merkmalen des Patentanspruchs 1 gelöst.

Bei dem Fahrzeugdach nach der Erfindung erfolgt also eine Sicherung des Koppelglieds in seiner Entkopplungsstellung durch ein federelastisches Sicherungselement, das durch ein Stellelement der Verstellkinematik zwischen einer Sicherungsstellung und einer Freigabestellung verstellbar ist. Das Sicherungselement bildet somit eine Anlage für das Koppelglied, damit dieses nicht in eine Freigabestellung schwenken kann, in welcher die Koppelstange in Längsrichtung der Führungsschienen verfahren werden könnte, was wiederum zu einer Betätigung des zweiten Kinematikelements führen würde. Zur Freigabe des Koppelglieds ist es erforderlich, dass ein als Stellelement dienendes Bauteil der Verstellkinematik das federelastische Sicherungselement gegen dessen Federkraft betätigt. Beim Verstellen des Deckelelements in die Öffnungsstellung gibt das Stellelement das federelastische Sicherungselement frei, wodurch dieses das Koppelglied der Koppelstange in seiner Aufnahme sichern bzw. verriegeln kann. Wenn das Deckelelement in seine Schließstellung verfahren wird, betätigt das Stellelement das federelastische Sicherungselement gegen die Federkraft, damit das Koppelglied für eine Kopplung mit dem ersten Kinematikelement freigegeben wird. Durch die Sicherung bzw. Verriegelung des Koppelglieds in der Aufnahme kann wirkungsvoll verhindert werden, dass sich das Koppelglied durch eine entsprechende Anregung quer zur Führungsschiene aus seiner Aufnahme bewegt bzw. löst. Das federelastische Sicherungselement sperrt also eine Bewegung des Koppelglieds und so eine Betätigung des zweiten Kinematikelements, insbesondere in einer Öffnungsstellung des Deckelelements. Die durch das federelastische Sicherungselement realisierte Verriegelung für das Koppelglied und damit für die Koppelstange ist robust und verschleißfest und zudem kostengünstig herstellbar.

Grundsätzlich ist es möglich, dass sich das Koppelglied zum Verstellen zwischen seiner Entkopplungsstellung und seiner Kopplungsstellung in eine beliebige Querrichtung der betreffenden Führungsschiene bewegt. Zweckmäßigerweise erstreckt sich aber der Bewegungspfad des Koppelglieds bei seinem Verstellen zwischen der Koppelstellung und der Entkoppelstellung in Fahrzeugquerrichtung oder in Fahrzeughochrichtung.

Bei dem Fahrzeugdach nach der Erfindung ist das Sicherungselement eine Blattfeder, die an der Führungsschiene fixiert ist und an der das Koppelglied in der Sicherungsstellung anliegt. Die Blattfeder weist zweckmäßigerweise im entspannten bzw. unbetätigten Zustand eine gewölbte Form auf und kann durch das Stellelement zur Freigabe des Koppelglieds niedergedrückt und in eine zumindest angenähert flache Anordnung gedrückt werden.

Bei Ausführung des federelastischen Sicherungselements als Blattfeder ist diese insbesondere mit der Führungsschiene vernietet oder verschraubt. Als Werkstoff für die Blattfeder eignet sich beispielsweise Stahl bzw. Federstahl.

Damit die Blattfeder in Schienenlängsrichtung bei ihrem Niederdrücken einen Längenausgleich erfahren kann und hierbei keine Fehlstellung einnimmt, wirkt die Blattfeder bei einer speziellen Ausführungsform des Fahrzeugdachs nach der Erfindung an ihren seitlichen Rändern mit einem führungsschienenfesten Führungselement zusammen. Dieses Führungselement kann von einem Einsatz der Führungsschiene oder auch von Rippen oder sonstigen Wänden der betreffenden Führungsschiene gebildet sein.

Bei einer bevorzugten Ausführungsform des Fahrzeugdachs nach der Erfindung, die eine zuverlässige Betätigung des Sicherungselements ermöglicht, ist das Stellelement das erste Kinematikelement, das beispielsweise beim Verfahren zum Verstellen des Deckelelements in dessen Öffnungsstellung das Sicherungselement freigibt und beim Verfahren des Deckelelements in dessen Schließstellung auf das Sicherungselement auffährt und dieses niederdrückt.

Bei einer speziellen Ausführungsform des Fahrzeugdachs nach der Erfindung, die zur Sicherung des Deckelelements gegen ein Verschieben in Fahrzeuglängsrichtung einen Riegelhebel aufweist, der schwenkbar an dem Deckelelement gelagert ist und der mit dem ersten Kinematikelement zusammenwirkt, kann der Riegelhebel das Stellelement bilden oder auch nur eine Vorsteuerung des federelastischen Sicherungselements vornehmen, bevor ein weiteres Stellelement, das insbesondere von dem ersten Kinematikelement gebildet ist, auf das federelastische Sicherungselement auffährt und dieses in die Freigabestellung verstellt.

Um zu gewährleisten, dass der Riegelhebel möglichst reibungsarm mit dem Sicherungselement zusammenwirkt, kann der Riegelhebel eine Stellfläche aufweisen, die von einer Kunststoffumspritzung gebildet ist.

Zudem kann das federelastische Sicherungselement zur Reduzierung des Reibwertes eine Gleitbeschichtung aufweisen.

Grundsätzlich kann das zweite Kinematikelement ein beliebiges Bauelement sein, das zur Betätigung über die Koppelstange mit dem Antriebsschlitten koppelbar ist. Insbesondere ist das zweite Kinematikelement aber ein Ausstellhebel für das Deckelelement, der vorzugsweise mittels der Koppelstange verschwenkbar ist und mittels dessen das Deckelelement aus seiner Schließstellung, in der die Dachöffnung verschlossen ist, in eine ausgestellte Position verstellbar ist, die eine so genannte Lüfterstellung des Deckelelements sein kann.

Eine spezielle Ausführungsform des Fahrzeugdachs und der Erfindung stellt ein so genanntes Spoilerdach dar, das ein Deckelelement umfasst, das beim Verfahren in seine Öffnungsstellung zunächst mit seinen hochseitigen Rand ausgestellt und dann heckwärts unter einen heckseitigen Festdachabschnitt verfahren wird. Durch das erfindungsgemäße Sicherungselement kann wirksam verhindert werden, dass sich ein zugeordneter, mit der Koppelstange wirkverbundener Ausstellhebel in ungewollter Weise verstellt und sich das Deckelelement auf dem heckseitigen Festdachabschnitt ablegt und diesen beschädigt.

Das erste Kinematikelement, das über die Koppelstange mit dem zweiten Kinematikelement koppelbar ist, ist vorzugsweise ein Antriebsschlitten, der mit einem Antriebskabel verbunden sein kann.

Grundsätzlich können die beiden Kinematikelemente aber beliebige Bauteile einer Schiebedachmechanik sein, die miteinander koppelbar sind. Denkbar ist es auch, dass die beiden Kinematikelemente jeweils ein Deckelelement einer Schiebedachanordnung oder zwei Schlitten zweier Deckelelemente darstellen.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines öffnungsfähigen Fahrzeugdachs nach der Erfindung ist in der Zeichnung schematisch vereinfacht dargestellt und wird in der nachfolgenden Beschreibung näher erläutert. Es zeigt:
- Figur 1: eine perspektivische Ansicht eines Fahrzeugdaches mit einem als Spoilerdach ausgebildeten Schiebedachsystem;
- Figur 2: einen ersten vertikalen Längsschnitt durch das Schiebedachsystem gemäß der Linie II in Figur 1 in einer Schließstellung eines Deckelelements ohne Darstellung von Festdachelementen;
- Figur 3: einen Figur 2 entsprechenden Schnitt durch das Schiebedachsystem, jedoch in einer Öffnungsstellung des Deckelelements;
- Figur 4: einen zweiten vertikalen Längsschnitt durch das Schiebedachsystem gemäß der Linie IV in Figur 1 in der Schließstellung des Deckelelements;
- Figur 5: einen Figur 4 entsprechenden Längsschnitt, jedoch in der Öffnungsstellung des Deckelelements;
- Figur 6: einen dritten vertikalen Längsschnitt durch das Schiebedachsystem gemäß der Linie VI in Figur 1 in der Schließstellung des Deckelelements;
- Figur 7: einen Figur 6 entsprechenden Längsschnitt, jedoch in der Öffnungsstellung des Deckelelements;
- Figur 8: einen vierten vertikalen Längsschnitt durch das Schiebedachsystem gemäß der Linie VIII in Figur 1 in der Schließstellung des Deckelelements;
- Figur 9: eine vergrößerte Darstellung des Bereichs IX in Figur 8;
- Figur 10: eine schematische Darstellung einer Kopplung einer Koppelstange mit einem Antriebsschlitten des Schiebedachsystems;
- Figur 11: eine Figur 10 entsprechende Ansicht, jedoch im entkoppelten Zustand von Koppelstange und Antriebsschlitten;
- Figur 12: einen Längsschnitt durch eine Blattfeder zur Sicherung der Koppelstange im montierten und entspannten Zustand;
- Figur 13: die Blattfeder in einer Draufsicht zusammen mit einem Führungselement; und
- Figur 14: eine Seitenansicht der Blattfeder und des Führungselements.

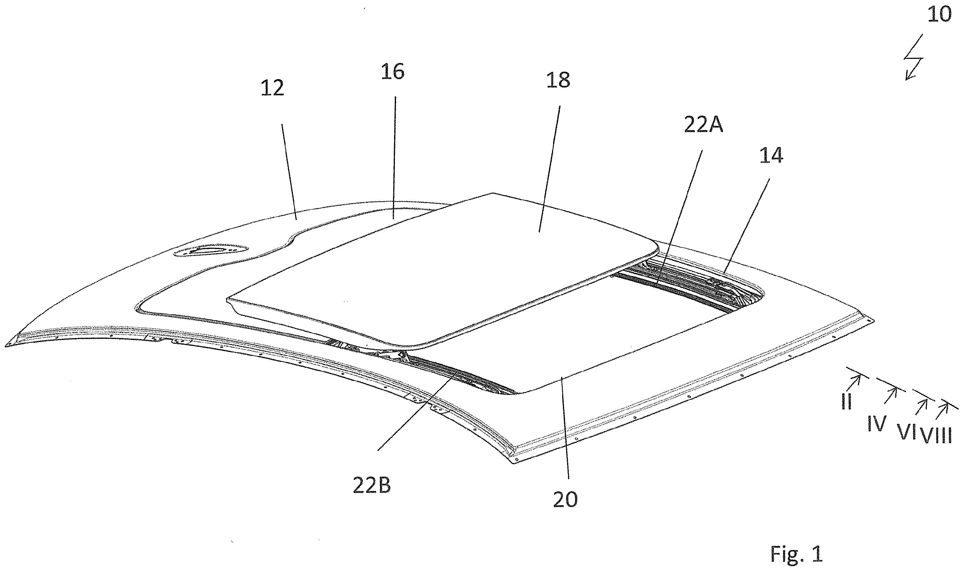

In Figur 1 ist ein Dachmodul 10 dargestellt, das als öffnungsfähiges Fahrzeugdach bei einem Personenkraftwagen einsetzbar ist und über seinen umlaufenden Rand mit dem Aufbau des Personenkraftwagens verbunden werden kann.

Das Dachmodul 10 umfasst einen rahmenartigen, blickdichten Festdachabschnitt 12, der einen Dachausschnitt 14 umschließt, welcher durch ein erstes, gegenüber dem Festdachabschnitt 12 unbeweglich angeordnetes, transparentes Festdachelement 16, das einen weiteren Festdachabschnitt bildet, und ein in Dachlängsrichtung verfahrbares Deckelelement 18, das Bestandteil eines als Spoilerdach ausgebildeten Schiebedachsystems ist, abgedeckt werden kann. Mittels des Deckelelements 18 kann eine Dachöffnung 20, die heckseitig von dem Festdachelement 16 und bugseitig und seitlich von dem Festdachabschnitt 12 begrenzt ist, wahlweise verschlossen oder zumindest teilweise freigegeben werden. Zur Freigabe der Dachöffnung 20 wird das Deckelelement 18 ausgehend von einer die Dachöffnung 20 verschließenden Schließstellung mit seinem heckseitigen, an das Festdachelement 16 angrenzenden Rand ausgestellt und dann zur Freigabe der Dachöffnung 20 heckwärts über das Festdachelement 16 in eine Öffnungsstellung verfahren.

Zum Verstellen des Deckelelements 18 weist das Dachmodul 10 bezogen auf eine vertikale Dachlängsmittelebene beidseits jeweils eine Verstellkinematik 22A bzw. 22B auf. Die Verstellkinematiken 22A und 22B sind spiegelsymmetrisch zueinander angeordnet, weswegen nachfolgend der Übersichtlichkeit halber nur die bezogen auf die Vorwärtsfahrtrichtung des betreffenden Fahrzeugs links angeordnete Verstellkinematik 22A beschrieben wird. Die bezogen auf die Vorwärtsfahrtrichtung des Fahrzeugs rechts angeordnete Verstellkinematik 22B ergibt sich damit ebenfalls zwanglos.

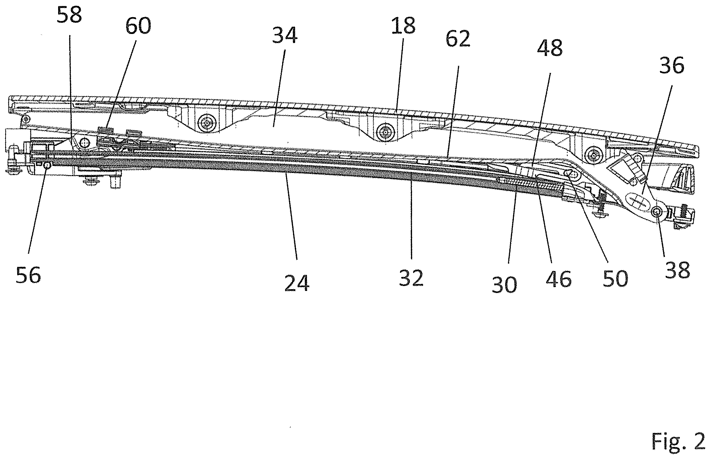

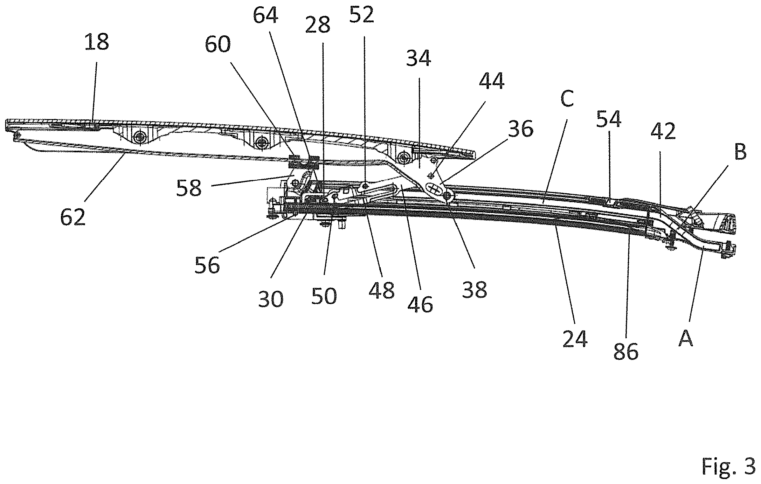

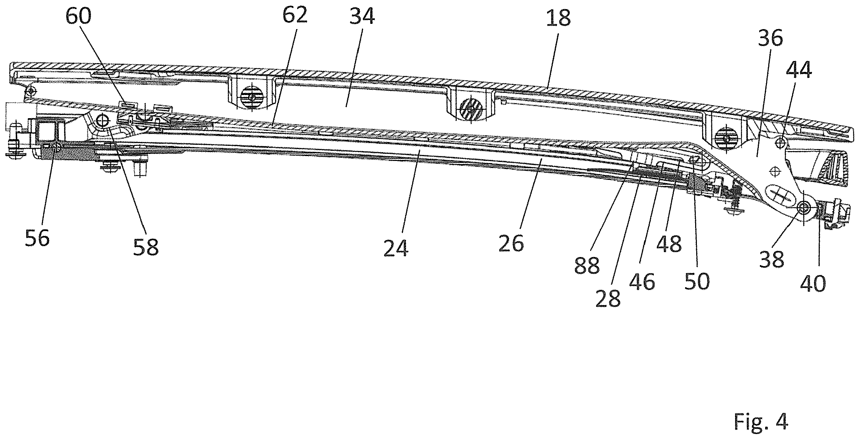

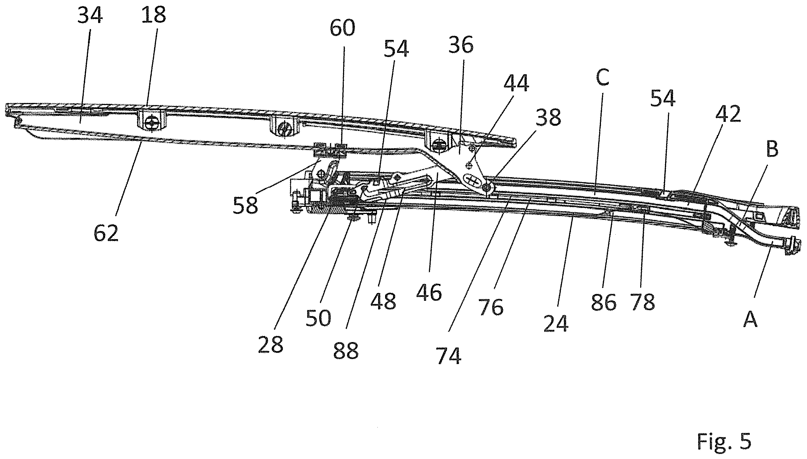

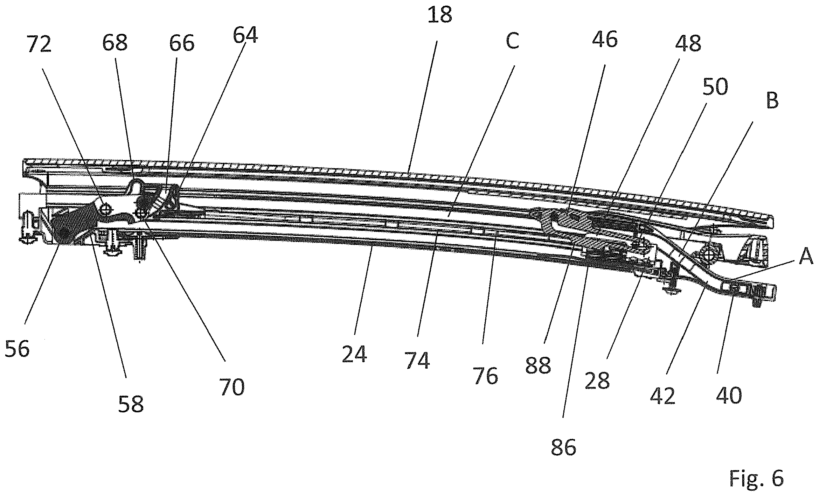

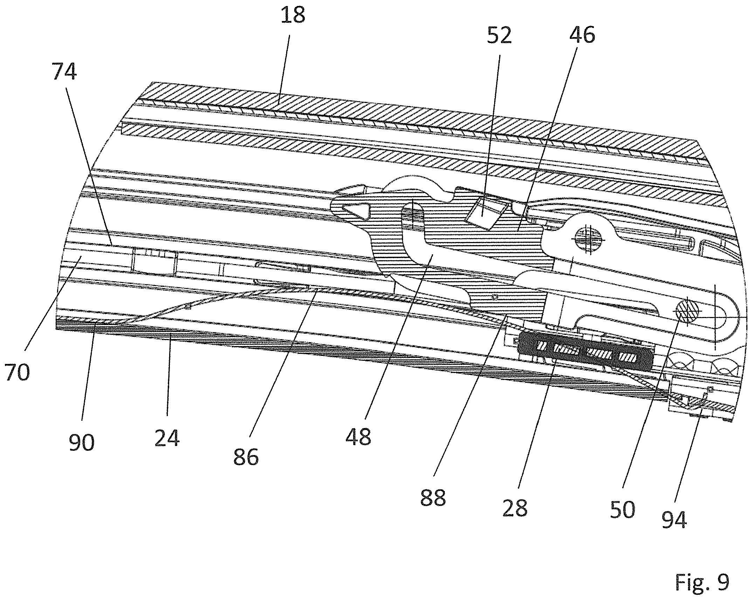

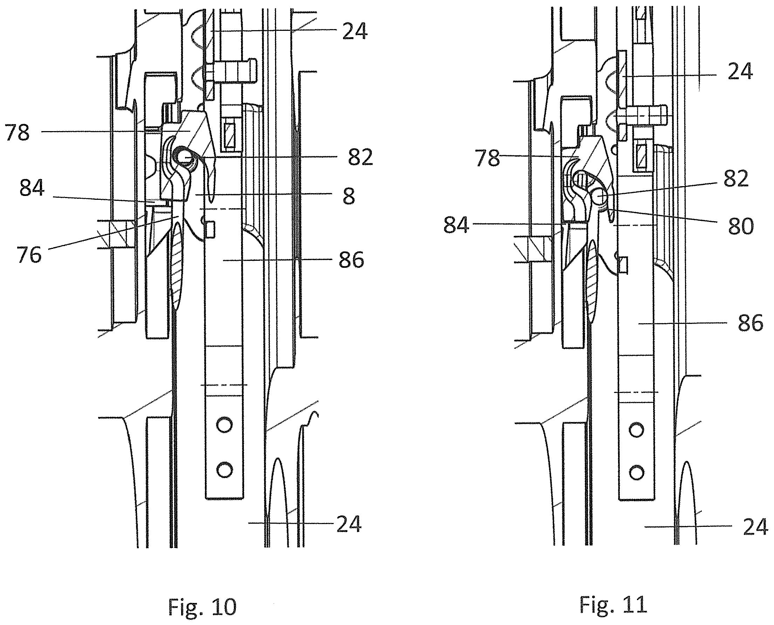

Die in den Figuren 2 bis 14 detailliert dargestellte Verstellkinematik 22A umfasst eine Führungsschiene 24, die sich in Dachlängsrichtung erstreckt und die mit einer Führungsbahn 26 für einen Antriebsschlitten 28 versehen ist, der ein erstes Kinematikelement darstellt. Der Antriebsschlitten 28 ist mit einem Antriebskabel 30 verbunden, welches in einem Kabelkanal 32 der Führungsschiene 24 geführt ist und mittels eines hier nicht näher dargestellten Antriebsmotors für beide Verstellkinematiken 22A und 22B angetrieben ist.

Das Deckelelement 18 ist an seiner Unterseite mit einem sich in Dachlängsrichtung erstreckenden Trägerelement 34 versehen, welches einen bugseitigen, schräg nach vorne unten weisenden Fortsatz 36 aufweist, an dem über einen Lagerzapfen 38 ein bugseitiger Gleiter 40 drehbar gelagert ist, der in einem Führungskanal 42 der Führungsschiene 24 verschiebbar geführt ist. Der Führungskanal 42 hat einen vorderen, der Schließstellung des Deckelelements 18 zugeordneten ersten Abschnitt A, der über einen im weitesten Sinne S-förmigen Abschnitt B in einen dritten Abschnitt C übergeht, der bezogen auf die Hochrichtung des betreffenden Fahrzeugs in einer Ebene liegt, die oberhalb der Ebene liegt, in der der Abschnitt A liegt.

An den Fortsatz 36 des Trägerelements 34 ist über einen Gelenkpunkt 44 ein Riegelhebel 46 angelenkt, der eine im weitesten Sinne L-förmige Kulissenbahn 48 aufweist, in welcher ein Kulissenzapfen 50 verschiebbar geführt ist, welcher an dem Antriebsschlitten 28 ausgebildet ist. Über den Riegelhebel 46 erfolgt damit eine Kopplung zwischen dem Deckelelement 18 und dem Antriebsschlitten 28.

An dem Riegelhebel 46 ist des Weiteren ein Riegelstein 52 ausgebildet, der in der Schließstellung des Deckelelements 18 in eine Riegelausnehmung 54 der Führungsschiene 24 eingreift und so das Deckelelement 18 gegen ein ungewolltes Verschieben in Fahrzeuglängsrichtung sichert und beim Verfahren des Deckelelements 18 in einem weiteren Führungskanal 55 der Führungsschiene 24 geführt ist.

Im heckseitigen Bereich der Führungsschiene 24 ist über einen Drehpunkt 56 ein Ausstellhebel 58 angelenkt, an dessen dem Drehpunkt 56 abgewandten Ende ein Gleitelement 60 angelenkt ist, das mit einer Führungsbahn 62 des Trägerelements 34 in Eingriff steht. Mittels des ein zweites Kinematikelement darstellenden Ausstellhebels 58 kann beim Verstellen des Deckelelements 18 aus der Schließstellung in die Freigabestellung der heckseitige Rand des Deckelelements 18 angehoben werden, so dass das Deckelelement 18 anschließend durch Verfahren des Trägerelements 34 an dem Gleitelement 60 des Ausstellhebels 58 heckwärts über das Festdachelement 16 verfahren werden kann.

Zur Betätigung wirkt der Ausstellhebel 58 mit einem Ausstellschlitten 64 zusammen, der zwei Kulissenbahnen 66 und 68 aufweist, in denen jeweils ein Kulissenzapfen 70 bzw. 72 des Ausstellhebels 58 geführt ist. Der Ausstellschlitten 64 ist in der Führungsschiene 24 in einem Kanal 74 verschiebbar geführt und mit einer ebenfalls in dem Kanal 74 geführten Koppelstange 76 versehen, die an ihrem dem Ausstellschlitten 64 abgewandten Ende ein Koppelglied 78 trägt, welches eine Koppelausnehmung 80 aufweist, die mit einem Koppelzapfen 82 des Antriebsschlittens 28 in Eingriff gebracht werden kann.

In der Schließstellung des Deckelelements 18 ist die Koppelstange 76 über das Koppelglied 78 und den Koppelzapfen 82 mit dem Antriebsschlitten 28 gekoppelt. Wird dann der Antriebsschlitten 28 in Heckrichtung verschoben, erfährt auch der Ausstellschlitten 64 eine Translation in Heckrichtung, wodurch der Ausstellhebel 58 durch das Verfahren der Kulissenzapfen 70 und 72 in den Kulissenbahnen 66 und 68 in seine Ausstellposition verschwenkt wird. Wenn die Ausstellposition des Ausstellhebels 58 erreicht ist, nimmt das Koppelglied 78 der Koppelstange 76 eine Position in Längsrichtung der Führungsschiene 24 ein, die mit der Position einer seitlichen Riegelausnehmung 84 der Führungsschiene 24 korrespondiert. Damit ist das Koppelglied bezogen auf die Dachlängsmittelebene nach außen freigegeben. Aufgrund der in Heckrichtung und in Richtung Dachlängsmittelebene verlaufenden Form der Koppelausnehmung 80 des Koppelglieds 78 erfährt das Koppelglied 78 dann ein Verstellmoment in Querrichtung der Führungsschiene 24, so dass es in die Riegelausnehmung 84 eintaucht und der Koppelzapfen 82 gleichzeitig aus der Riegelausnehmung 84 ausfährt. Da die Riegelausnehmung 84 eine Erstreckung in Längsrichtung der Führungsschiene 24 hat, die mit den Abmessungen des Koppelglieds 78 korrespondiert, ist dann die Koppelstange 76 und auch der Ausstellschlitten 64 gegen ein Verschieben in Längsrichtung gesichert. Somit ist wiederum der Ausstellhebel 58 in seiner Ausstellposition gesichert.

Um zu verhindern, dass sich das Koppelglied 78 in ungewollter Weise aus der Riegelausnehmung 84 löst, ist am Boden der Führungsschiene eine ein federelastisches Sicherungselement darstellende Blattfeder 86 angeordnet, die sich mit einer Wölbung in Hochrichtung in Schienenlängsrichtung erstreckt und die entspannt ist, wenn das Koppelglied 78 in die Riegelausnehmung 84 eingerückt ist. Dies entspricht der Sicherungsstellung der Blattfeder 86, in der das Koppelglied 78 mit seiner der Fahrzeuglängsmittelebene zugewandten Seite an der Blattfeder 86 anliegt.

Wenn die Koppelstange 76 bzw. das Koppelglied 78 mit dem Antriebsschlitten 28 beim Verfahren des Deckelelements 18 in seine Schließstellung gekoppelt werden soll, fährt zunächst der Riegelhebel 46 mit einer an seiner Unterseite angeordneten Vorsteuerfläche 88 auf die Blattfeder 86 auf, so dass diese entgegen ihrer Vorspannung nach unten gedrückt wird. Anschließend fährt der Antriebsschlitten 28 auf die Blattfeder 86 auf, wodurch diese vollständig in eine nahezu ebene Anordnung niedergedrückt wird und das Koppelglied 78 zur Kopplung mit dem Antriebsschlitten 28 freigegeben ist. Durch das Verfahren des Antriebsschlittens 28 in Bugrichtung erfährt das Koppelglied 78 aufgrund der Formgebung der Koppelausnehmung 80 beim Einfahren des Koppelzapfens 82 des Antriebsschlittens 28 in die Koppelausnehmung 80 ein Verstellmoment in Richtung der vertikalen Dachlängsmittelebene, wodurch es aus der Riegelausnehmung 84 gezogen wird und der Ausstellschlitten 64 zum Ablegen des Ausstellhebels 58 zusammen mit dem Antriebsschlitten 28 in Bugrichtung verfahren wird. Der Antriebsschlitten 28 bildet also ein Stellelement und der Riegelhebel 46 bildet ein Vorsteuerelement für die Blattfeder 86.

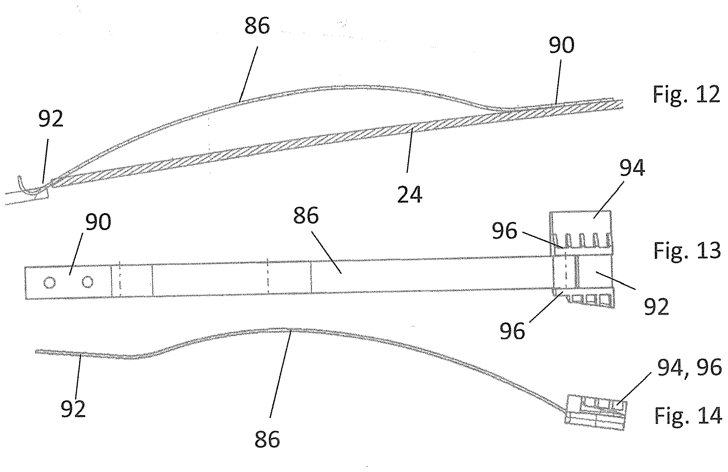

Die Vorsteuerfläche 88 des Riegelhebels 46 ist aus einer Kunststoffumspritzung gebildet. Die Blattfeder 86 ist aus Federstahl gefertigt und an ihrem heckseitigen Ende 90 mit dem Boden der Führungsschiene 24 vernietet. Wie insbesondere den Figuren 13 und 14 zu entnehmen ist, ist die Blattfeder 86 mit ihrem aufgebogenen vorderen Ende 92 in einem Führungselement 94 geführt, das ein Einsatz der Führungsschiene 24 ist und aufgrund zweier Längsrippen 96, zwischen denen das vordere Ende 92 der Blattfeder 86 geführt ist, eine zuverlässige Längsausrichtung der Blattfeder 86 gewährleistet.

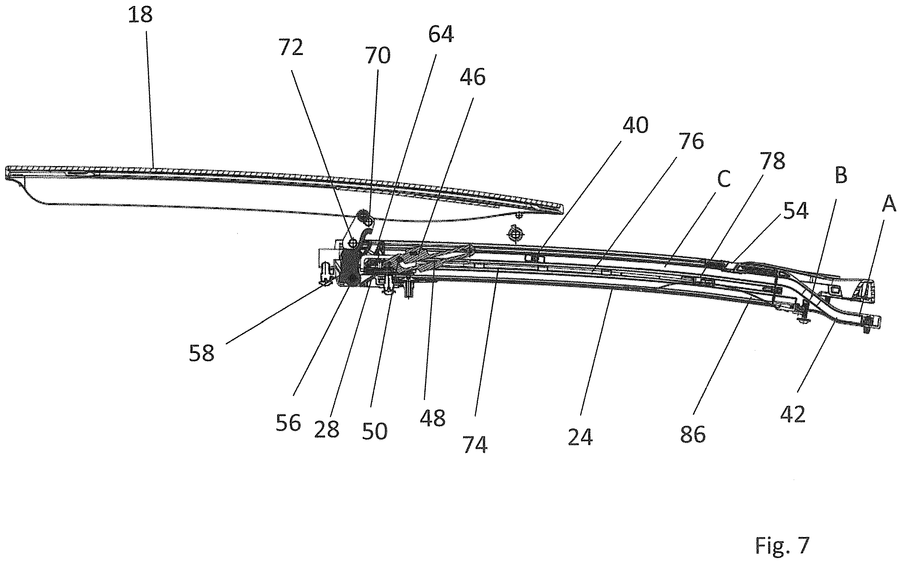

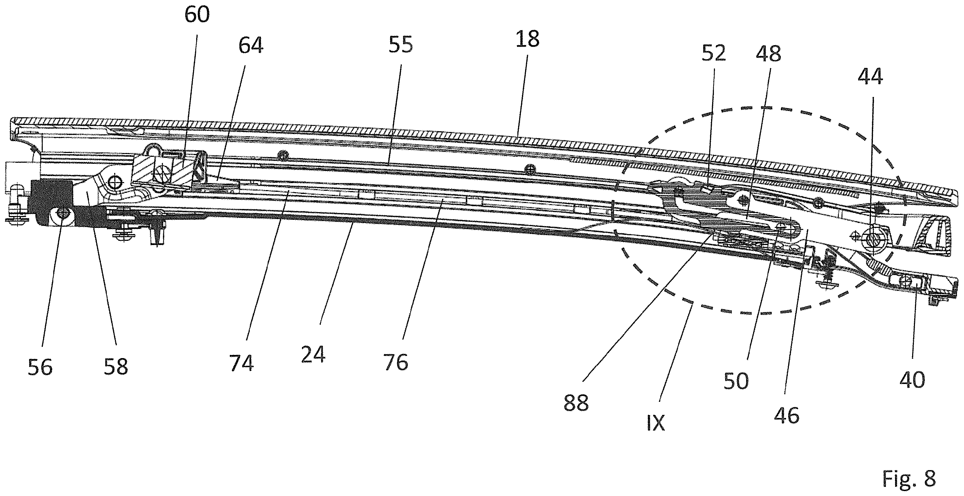

In den Figuren 7 und 8 hat die Blattfeder 86 aus Darstellungsgründen trotz der gezeigten Schließstellung des Deckelelements 18, in der das Koppelglied 78 gegenüber der Riegelausnehmung 84 freigegeben ist, die ihrer Sicherungsstellung zugeordnete Wölbung.

Das vorstehend beschriebene Schiebedachsystem arbeitet in nachfolgend beschriebener Weise.

Ausgehend von der in Figur 2 dargestellten Schließstellung wird mittels des Antriebsmotors der Antriebsschlitten 28 nach hinten, das heißt in Heckrichtung verfahren. Hierbei ist der Ausstellschlitten 64 über die Koppelstange 76 mit dem Antriebsschlitten 28 gekoppelt, so dass der Ausstellhebel 58 verschwenkt und der hintere Rand des Deckelelements 18 angehoben wird. In dieser Phase durchfährt der Kulissenzapfen 50 des Antriebsschlittens 28 die Kulissenbahn 48 des Riegelhebels 46, wodurch dieser verschwenkt wird und der Riegelstein 52 aus der Riegelausnehmung 54 in eine unterhalb angeordnete Führungsbahn der Führungsschiene 24 gebracht wird. Sobald der Ausstellhebel 58 seine Ausstellposition erreicht hat, erfolgt eine Entkopplung zwischen dem Antriebsschlitten 28 und der Koppelstange 76 in der bereits oben beschriebenen Weise, das heißt das Koppelglied 78 der Koppelstange 76 wird in die Riegelausnehmung 84 gebracht, wodurch der Ausstellhebel 58 in seiner Ausstellposition gesichert ist. Gleichzeitig wird auch die Blattfeder 86 von dem Antriebsschlitten 28 freigegeben. Durch die resultierende Wölbung der Blattfeder 86 bildet diese ein Sicherungselement, das das Koppelglied 78 in seiner Riegelausnehmung 84 hält. Ein weiteres Verfahren des Antriebsschlittens 28, dessen Kulissenzapfen 50 dann am hinteren Rand der Kulissenbahn 48 in deren kurzen Schenkel anliegt, bewirkt durch entsprechende Zugkräfte auf den Riegelhebel 46, der durch den Riegelstein 52 in dem Führungskanal 55 der Führungsschiene gegen ein Verschwenken gesichert ist, eine Translation des Deckelelements 18 in Fahrzeugheckrichtung über das Festdachelement 16.

Das Verfahren des Deckelelements 18 in seine Schließstellung erfolgt in analog umgekehrter Weise.

### Bezugszeichenliste

- 10: Dachmodul
- 12: Festdachabschnitt
- 14: Dachausschnitt
- 16: Festdachelement
- 18: Deckelelement
- 20: Dachöffnung
- 22A, B: Verstellkinematik
- 24: Führungsschiene
- 26: Führungsbahn
- 28: Antriebsschlitten
- 30: Antriebskabel
- 32: Kabelkanal
- 34: Trägerelement
- 36: Fortsatz
- 38: Lagerzapfen
- 40: Gleiter
- 42: Führungskanal
- 44: Gelenkpunkt
- 46: Riegelhebel
- 48: Kulissenbahn
- 50: Kulissenzapfen
- 52: Riegelstein
- 54: Riegelausnehmung
- 55: Führungskanal
- 56: Drehpunkt
- 58: Ausstellhebel
- 60: Gleitelement
- 62: Führungsbahn
- 64: Ausstellschlitten
- 66: Kulissenbahn
- 68: Kulissenbahn
- 70: Kulissenzapfen
- 72: Kulissenzapfen
- 74: Kanal
- 76: Koppelstange
- 78: Koppelglied
- 80: Koppelausnehmung
- 82: Koppelzapfen
- 84: Riegelausnehmung
- 86: Blattfeder
- 88: Vorsteuerfläche
- 90: Ende
- 92: Ende
- 94: Führungselement
- 96: Längsrippen

## Patentansprüche

1. Öffnungsfähiges Fahrzeugdach, umfassend ein Deckelelement (18), das bezogen auf eine vertikale Dachlängsmittelebene beidseits jeweils mit einer Verstellkinematik (22A, 22B) versehen ist, die eine Führungsschiene (24) umfasst und mittels der das Deckelelement (18) zwischen einer eine Dachöffnung (20) verschließenden Schließstellung und einer die Dachöffnung (20) zumindest teilweise freigebenden Öffnungsstellung verstellbar ist, wobei die Verstellkinematiken (22A, 22B) jeweils ein erstes Kinematikelement und ein zweites Kinematikelement umfassen, das mit einer Koppelstange (76) verbunden ist, die über ein Koppelglied (78) lösbar mit dem ersten Kinematikelement koppelbar ist und zwischen einer Koppelstellung und einer Entkoppelstellung verstellbar ist, in der das Koppelglied (78) von einer Riegelausnehmung (84) der Führungsschiene (24) aufgenommen ist, **dadurch gekennzeichnet, dass** das Koppelglied (78) in seiner Entkoppelstellung durch ein federelastisches Sicherungselement in der Riegelausnehmung (84) der Führungsschiene (24) gehalten ist, das eine Blattfeder (86) ist, die an der Führungsschiene (24) fixiert ist und durch ein Stellelement der Verstellkinematik (22A, 22B) zwischen einer Sicherungsstellung und einer Freigabestellung verstellbar ist, wobei das Koppelglied (78) in der Sicherungsstellung an der Blattfeder (86) anliegt.

2. Öffnungsfähiges Fahrzeugdach nach Anspruch 1, **dadurch gekennzeichnet, dass** die Blattfeder (86) an ihren seitlichen Rändern mit einem führungsschienenfesten Führungselement (94) zusammenwirkt.

3. Öffnungsfähiges Fahrzeugdach nach Anspruch 2, **dadurch gekennzeichnet, dass** das Führungselement (94) von einem Einsatz der Führungsschiene (24) gebildet ist.

4. Öffnungsfähiges Fahrzeugdach nach einem der Ansprüche 1 bis 3, **dadurch gekennzeichnet, dass** das Stellelement ein Riegelhebel (46) ist, der schwenkbar an dem Deckelelement (18) gelagert ist und der mit dem ersten Kinematikelement zusammenwirkt.

5. Öffnungsfähiges Fahrzeugdach nach Anspruch 4, **dadurch gekennzeichnet, dass** der Riegelhebel (46) eine Steuerfläche (88) hat, die von einer Kunststoffumspritzung gebildet ist.

6. Öffnungsfähiges Fahrzeugdach nach Anspruch 5, **dadurch gekennzeichnet, dass** das federelastische Sicherungselement eine Gleitbeschichtung aufweist.

7. Öffnungsfähiges Fahrzeugdach nach einem der Ansprüche 1 bis 6, **dadurch gekennzeichnet, dass** das zweite Kinematikelement einen Ausstellhebel (58) für das Deckelelement (18) umfasst, der vorzugsweise mittels der Koppelstange (76) verschwenkbar ist.

8. Öffnungsfähiges Fahrzeugdach nach einem der Ansprüche 1 bis 7, **dadurch gekennzeichnet, dass** das Deckelelement (18) in seiner Öffnungsstellung oberhalb eines Festdachabschnitts angeordnet ist.

9. Öffnungsfähiges Fahrzeugdach nach einem der Ansprüche 1 bis 8, **dadurch gekennzeichnet, dass** das erste Kinematikelement ein Antriebsschlitten (28) ist, der in der Führungsschiene (24) geführt ist.

## Claims

1. An openable vehicle roof, comprising a lid element (18), which is provided with displacement kinematics (22A, 22B) on each of its two sides relative to a vertical longitudinal centre plane of the roof, said displacement kinematics (22A, 22B) each comprising a guide rail (24) and being able to displace the lid element (18) between a closed position closing a roof opening (20) and an open position at least partially opening the roof opening (20) and each (22A, 22B) comprising a first kinematic element and a second kinematic element connected to a coupling rod (76), which is detachably coupled to the first kinematic element via a coupling member (78) and is displaced between a coupling position and a decoupling position, in which the coupling member (78) is accommodated by a locking recess (84) of the guide rail (24), **characterised in that** the coupling member (78) is held in its decoupling position by a resilient securing element in the locking recess (84) of the guide rail (24), said resilient securing element being a leaf spring (86), which is fixed to the guide rail (24) and is displaced between a securing position and a releasing position via a positioning element of the displacement kinematics (22A, 22B), the coupling member (78) abutting against the leaf spring (86) in the securing position.

2. The openable vehicle roof according to claim 1, **characterised in that** at its lateral edges, the leaf spring (86) interacts with a guide element (94) fixedly arranged on the guide rail (24).

3. The openable vehicle roof according to claim 2, **characterised in that** the guide element (94) is formed by an insert of the guide rail (24).

4. The openable vehicle roof according to any one of the claims 1 to 3, **characterised in that** the positioning element is a locking lever (46) which is pivotally mounted on the lid element (18) and interacts with the first kinematic element.

5. The openable vehicle roof according to claim 4, **characterised in that** the locking lever (46) has a control surface (88), which is formed by a plastic injection moulding.

6. The openable vehicle roof according to claim 5, **characterised in that** the resilient securing element comprises a slide coating.

7. The openable vehicle roof according to any one of the claims 1 to 6, **characterised in that** the second kinematic element comprises a deployment lever (58) for the lid element (18), said deployment lever (58) preferably being pivotable by means of the coupling rod (76).

8. The openable vehicle roof according to any one of the claims 1 to 7, **characterised in that** the lid element (18) is arranged above a fixed-roof section when in its open position.

9. The openable vehicle roof according to any one of the claims 1 to 8, **characterised in that** the first kinematic element is a drive carriage (28) which is guided in the guide rail (24).

## Revendications

1. Toit de véhicule configuré pour être ouvert, le toit de véhicule comprenant un élément de couvercle (18) qui est pourvu d'une cinématique de déplacement (22A, 22B) sur chacun de ses deux côtés par rapport à un/de chaque côté d'un plan médian longitudinal vertical du toit, chacune des cinématiques de déplacement (22A, 22B) comprenant une glissière de guidage (24) et étant configurées pour déplacer l'élément de couvercle (18) entre une position de fermeture fermant une ouverture de toit (20) et une position ouverte dégageant l'ouverture de toit (20) au moins en partie et chacune des cinématiques de déplacement (22A, 22B) comprenant un premier élément cinématique et un deuxième élément cinématique relié à une barre de couplage (76) qui est configuré à être couplée au premier élément cinématique de manière détachable par un élément de couplage (78) et est déplaçable entre une position de couplage et une position de découplage dans laquelle l'élément de couplage (78) est reçu par un évidement de verrou (84) de la glissière de guidage (24), **caractérisé en ce que** l'élément de couplage (78) est retenu dans sa position de découplage par un élément de sécurité ayant élasticité par ressort dans l'évidement de verrou (84) de la glissière de guidage (24), l'élément de sécurité ayant élasticité par ressort étant un ressort à lames (86) qui est fixé à la glissière de guidage (24) et est déplaçable entre une position de sécurité et une position de déverrouillage par un élément de de réglage de la cinématique de déplacement (22A, 22B), l'élément de couplage (78) venant en appui contre le ressort à lames (86) dans la position de sécurité.

2. Toit de véhicule qui peut être ouvert selon la revendication 1, **caractérisé en ce qu'**à ses bords latéraux, le ressort à lames (86) interagit avec un élément de guidage (94) disposé fixement sur la glissière de guidage (24).

3. Toit de véhicule qui peut être ouvert selon la revendication 2, **caractérisé en ce que** l'élément de guidage (94) est formé par un insert de la glissière de guidage (24).

4. Toit de véhicule qui peut être ouvert selon l'une quelconque des revendications 1 à 3, **caractérisé en ce que** l'élément de réglage est un levier de verrou (46) qui est monté de manière pivotante sur l'élément de couvercle (18) et interagit avec le premier élément cinématique.

5. Toit de véhicule qui peut être ouvert selon la revendication 4, **caractérisé en ce que** le levier de verrou (46) a une surface de commande (88) qui est formée par moulage par injection de plastique.

6. Toit de véhicule qui peut être ouvert selon la revendication 5, **caractérisé en ce que** l'élément de sécurité ayant élasticité par ressort comprend un revêtement de glissement.

7. Toit de véhicule qui peut être ouvert selon l'une quelconque des revendications 1 à 6, **caractérisé en ce que** le deuxième élément cinématique comprend un levier de repositionnement (58) pour l'élément de couvercle (18), le levier de repositionnement (58) étant pivotable de préférence au moyen de la barre de couplage (76).

8. Toit de véhicule qui peut être ouvert selon l'une quelconque des revendications 1 à 7, **caractérisé en ce que** l'élément de couvercle (18) est disposé au-dessus d'une partie de toit fixe quand dans sa position ouverte.

9. Toit de véhicule qui peut être ouvert selon l'une quelconque des revendications 1 à 8, **caractérisé en ce que** le premier élément cinématique est un chariot d'entraînement (28) qui est guidé dans la glissière de guidage (24).
